# EUROPEAN PATENT APPLICATION

(11) **EP 4 756 970 A1**
(43) Date of publication of application: **10.06.2026**
(21) Application number: 25220354.2
(22) Date of filing: 03.12.2025
(51) Int. Cl.: H01M 10/058, H01M 50/119, H01M 50/147, H01M 50/159, H01M 50/169, H01M 50/103

(54) **METHOD FOR MANUFACTURING ELECTRICITY STORAGE DEVICE AND ELECTRICITY STORAGE DEVICE**

(30) Priority: 09.12.2024 JP 2024214115
(71) Applicant: Prime Planet Energy & Solutions, Inc., Chuo-ku, Tokyo 103-0022 (JP)
(72) Inventor: KAWASHIMA, Naoya, Tokyo, 103-0022, (JP)
(74) Representative: Kuhnen & Wacker Patent- und Rechtsanwaltsbüro PartG mbB

(57) **Abstract**

A method for manufacturing an electricity storage device includes a case body preparing step, a closing plate preparing step, and a welding step. A closing plate prepared in the closing plate preparing step has a closing portion and a protruding portion. The closing portion covers an opening of the case body and overlaps an outside of the opening. The protruding portion protrudes outward beyond an outer edge of the opening continuously in a circumferential direction of the opening, with the closing portion closing the opening. In the welding step, a boundary between the case body and the closing plate is welded by irradiating the protruding portion of the closing plate with laser light, with the closing plate mounted on the case body so as to close the opening, to melt the protruding portion.

## Description

### BACKGROUND OF THE DISCLOSURE

The present disclosure relates to a method for manufacturing an electricity storage device and to an electricity storage device.

Japanese Patent Application Publication No. 2016-207387 discloses a method for manufacturing a secondary battery that includes a step (welding step) of welding a lid to an exterior can that accommodates an electrode assembly. The exterior can is a bottomed rectangular tubular case body, in which the end of the tubular sidewall opposite to the bottom is opened. In the welding step, with an entire end face of the sidewall (edge of the opening) around the opening of the exterior can being in contact with an entire peripheral edge of its lid, the peripheral edge is irradiated and scanned with laser light. As a result, the edge of the opening of the exterior can and the peripheral edge of the lid are welded together over their entire peripheries.

### SUMMARY

Meanwhile, the inventors of the present application have sought to provide a novel method for manufacturing an electricity storage device that is suitable for securing welding strength while suppressing entry of welding spatter into the case, and also to provide an electricity storage device manufactured by this method.

A method for manufacturing an electricity storage device disclosed herein includes the steps of: preparing a case body having, at at least one side thereof, an opening; preparing a closing plate for closing the opening; and laser-welding the case body and the closing plate with the closing plate mounted on the case body so as to close the opening. The closing plate prepared in the step of preparing the closing plate includes: a closing portion that covers the opening and overlaps an outside of the opening; and a protruding portion that protrudes outward beyond an outer edge of the opening continuously in a circumferential direction of the opening, with the closing portion closing the opening. In the step of laser-welding the case body and the closing plate, a boundary between the case body and the closing plate is welded by irradiating the protruding portion with laser light to melt the protruding portion.

Such a method for manufacturing an electricity storage device is suitable for securing welding strength while suppressing entry of welding spatter into the case when welding the closing plate to the case body.

### BRIEF DESCRIPTION OF THE DRAWINGS

FIG. 1 is a perspective view showing an electricity storage device according to one embodiment of the present disclosure.
FIG. 2 is another perspective view showing the electricity storage device shown in FIG. 1, with its top and bottom reversed.
FIG. 3 shows an internal structure of the electricity storage device shown in FIG. 1.
FIG. 4 is a flowchart of a method for manufacturing an electricity storage device according to one embodiment of the present disclosure.
FIG. 5 is a side view of a closing plate prepared in the closing plate preparation step.
FIG. 6 is a partially enlarged cross-sectional view showing a state where the closing plate is mounted on the case body in the method for manufacturing an electricity storage device.
FIG. 7 is a partially enlarged cross-sectional view showing a welding step in the method for manufacturing an electricity storage device.
FIG. 8 is a partially enlarged cross-sectional view showing a state after the welding step shown in FIG. 7.
FIG. 9 is a partially enlarged cross-sectional view showing a welding step in a method for manufacturing a variant of the electricity storage device shown in FIG. 1.
FIG. 10 is a partially enlarged cross-sectional view showing a state after the welding step shown in FIG. 9.

### DETAILED DESCRIPTION OF THE PREFERRED EMBODIMENTS

Hereinafter, embodiments of the technology disclosed herein will be described with reference to the drawings. It is apparent that the embodiments described herein are not intended to particularly limit the present disclosure. The respective drawings are schematic and do not necessarily reflect actual products. Members and portions that have the same actions are denoted by the same symbols as appropriate, and a redundant description thereof is omitted as appropriate. In the present specification, unless otherwise specified, expressions of numerical ranges such as "X to Y" shall be understood to mean "X or greater and Y or less".

In the present specification, "electricity storage device" refers to a device capable of charging and discharging. Examples of the electricity storage device generally encompass batteries referred to as lithium-ion batteries and lithium secondary batteries, as well as lithium polymer batteries, nickel-hydrogen batteries, and the like. A secondary battery generally refers to a battery capable of repeated charging and discharging, accompanied by transfer of charge carriers between a positive electrode and a negative electrode. The electricity storage device may use a liquid electrolyte or a solid electrolyte. For example, the secondary battery may be a so-called liquid electrolyte secondary battery using a liquid electrolyte, or a so-called all-solid-state battery using a solid electrolyte. Furthermore, examples of the electricity storage device also encompass capacitors such as an electric double-layer capacitor and a lithium-ion capacitor.

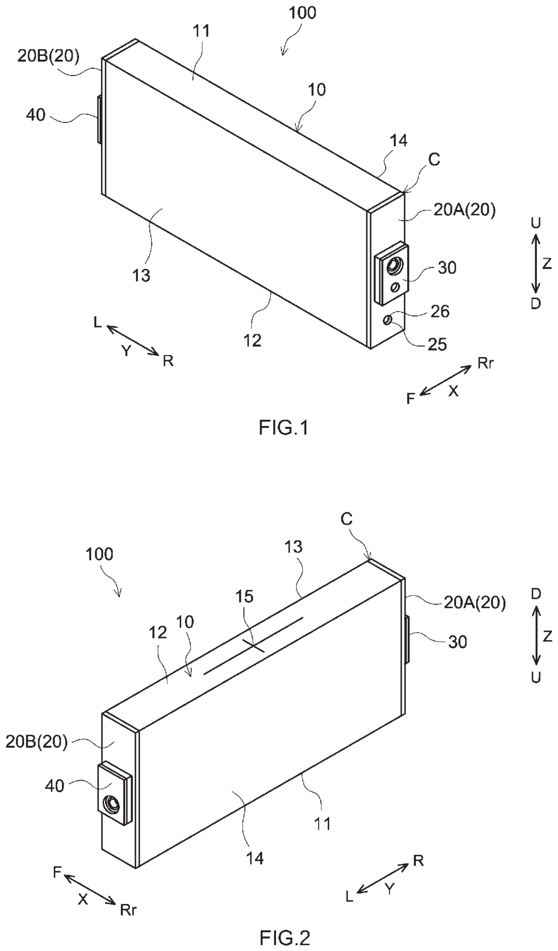

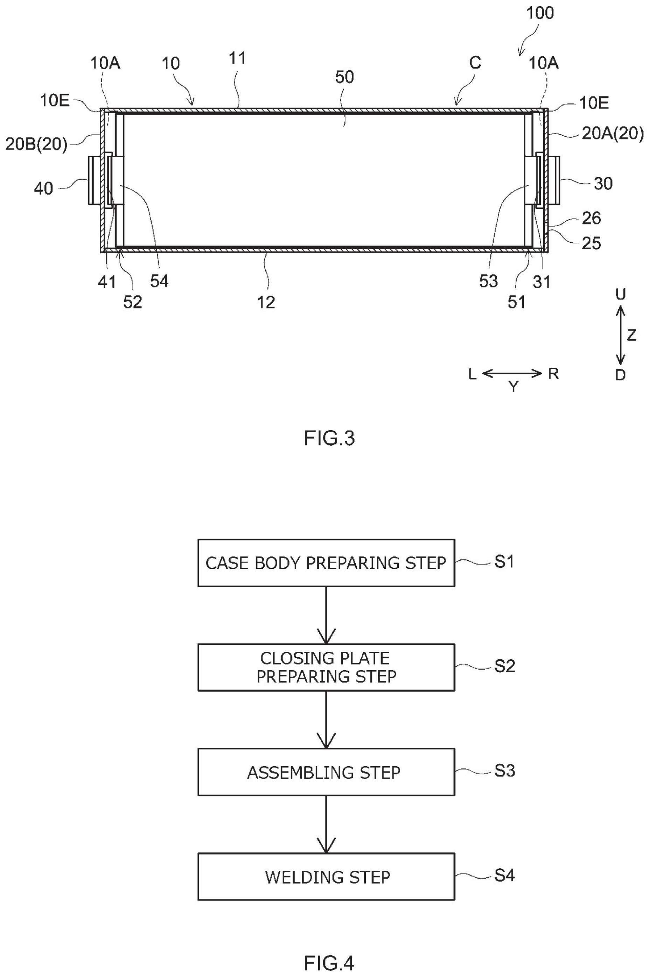

FIG. 1 is a perspective view showing an electricity storage device 100 according to one embodiment of the present disclosure. FIG. 2 is another perspective view showing the electricity storage device 100 of FIG. 1, with its top and bottom sides reversed. FIG. 3 shows an internal configuration of the electricity storage device 100. In the following description, reference symbols F, Rr, L, R, U, and D in the drawings represent front, rear, left, right, up, and down, respectively, and reference symbols X, Y, and Z in the drawings represent the thickness direction of the electricity storage device 100, the width direction orthogonal to the thickness direction, and the vertical direction orthogonal to both the width and thickness directions, respectively.

As shown in FIGS. 1 to 3, the electricity storage device 100 includes a case body 10, two closing plates 20 (closing plate 20A and closing plate 20B), a positive electrode terminal 30, a negative electrode terminal 40, an electrode assembly 50 (shown in FIG. 3), and a liquid electrolyte (not shown). In the present embodiment, the electricity storage device 100 is a lithium-ion secondary battery.

The case body 10 and the closing plates 20A and 20B form a case C of the electricity storage device 100. The case C accommodates the electrode assembly 50 and the liquid electrolyte. The case C has a box shape. The case C has a flat and rectangular parallelepiped (e.g., prismatic) outer shape.

As shown in FIG. 3, in the present embodiment, the case body 10 is a rectangular tubular case having openings 10A at both ends thereof (that is, in the present embodiment, the case body 10 has both side surfaces thereof open). Specifically, the case body 10 has edge portions 10E at both ends thereof in the width direction Y, each edge portion 10E defining the corresponding opening 10A. Each edge portion 10E surrounds the opening 10A. In other words, the edge portions 10E are the edges of the openings 10A. The case body 10 has a shape extending in the width direction Y. Such a case body 10 is made of metal. Examples of the constituent material for the case body 10 include aluminum, aluminum alloys, iron, and iron alloys. From the viewpoint of achieving both weight reduction and required rigidity of the case body 10, the constituent material for the case body 10 is preferably aluminum or an aluminum alloy mainly composed of aluminum.

As shown in FIGS. 1 and 2, the case body 10 has a pair of narrow side surfaces 11 and 12 (small-area side surfaces) and a pair of wide side surfaces 13 and 14 (large-area side surfaces) as case walls. Each of the narrow side surfaces 11 and 12 has a substantially rectangular shape that has long sides extending in the width direction Y and short sides extending in the thickness direction X and spreads in the width direction Y and the thickness direction X. The narrow side surfaces 11 and 12 in a pair are opposed to each other in the vertical direction Z. The narrow side surface 11 forms an upper surface of the case C or the case body 10. The narrow side surface 12 forms a lower surface of the case body 10.

Each of the wide side surfaces 13 and 14 has a substantially rectangular shape that has long sides extending in the width direction Y and short sides extending in the vertical direction Z and spreads in the width direction Y and the vertical direction Z. The wide side surfaces 13 and 14 in a pair are opposed to each other in the thickness direction X. The wide side surface 13 forms a front surface of the case body 10. The wide side surface 14 forms a rear surface of the case body 10. One of the long sides of the wide side surface 13 (front surface) is connected to one of the long sides of the narrow side surface 11 (upper surface), while the other long side of the wide side surface 13 is connected to one of the long sides of the narrow side surface 12 (lower surface). One of the long sides of the wide side surface 14 (rear surface) is connected to the other long side of the narrow side surface 11, while the other long side of the wide side surface 14 is connected to the other long side of the narrow side surface 12.

One end portion (right end portion in FIGS. 1 and 2) of each of the narrow side surfaces 11 and 12 and the wide side surfaces 13 and 14 in the width direction Y forms one edge portion 10E of the case body 10 (as shown in FIG. 3), while the other end portion (left end portion in FIGS. 1 and 2) thereof in the width direction Y forms the other edge portion 10E of the case body 10 (as shown in FIG. 3). Such a case body 10 is formed, for example, by bending a single metal plate into a tubular shape and then joining the abutted edges thereof to each other. An example of the joining method is welding.

In the present embodiment, as shown in FIG. 2, a gas release valve 15 is provided on the narrow side surface 12 (lower surface). The gas release valve 15 is configured to rupture when the pressure inside the case C reaches a predetermined value or higher. This rupture of the gas release valve 15 releases the gas inside the case C to the outside thereof, thereby preventing or suppressing further pressure increase inside the case C. Such a gas release valve 15 may be a cross-shaped notch, a linear notch (in the form of a vertical or horizontal line only), an elliptical valve (with a notch therein), or a circular valve (with a notch therein). FIG. 2 exemplarily shows a case where the gas release valve 15 is a cross-shaped notch. The dimensions (length and depth) of the notch of the gas release valve 15 can be determined as appropriate in consideration of, for example, the pressure resistance strength of the case C. In the case C, the gas release valve 15 may be provided at a position other than the narrow side surface 12, for example, on the narrow side surface 11, the wide side surface 13, the wide side surface 14, the closing plate 20A, or the closing plate 20B. The number of gas release valves 15 provided in the case C may be one or two or more. FIG. 2 exemplarily shows a case where the number of gas release valves 15 is one.

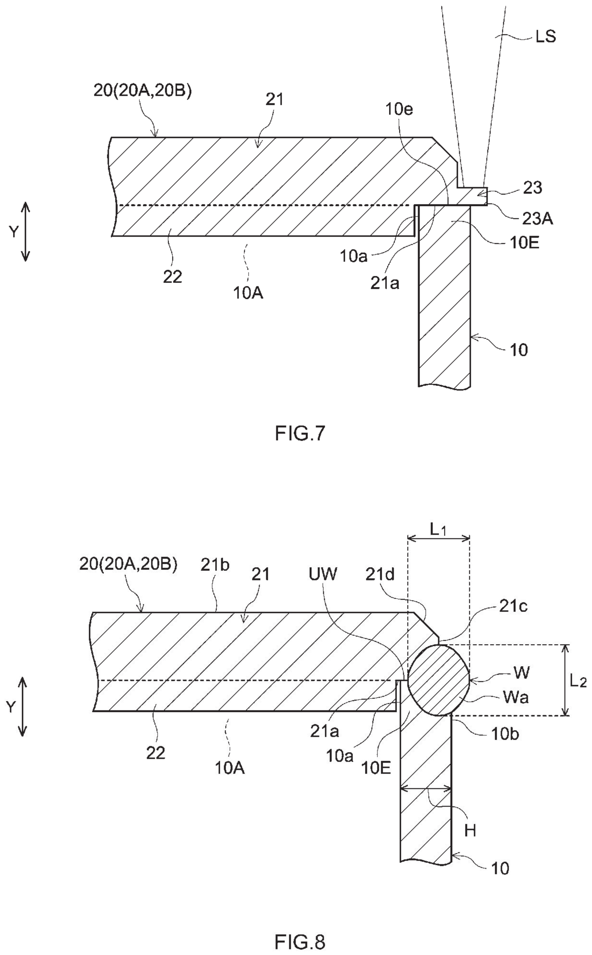

The closing plates 20 (closing plate 20A and closing plate 20B) are members that close the respective openings 10A (shown in FIG. 3) of the case body 10. The closing plate 20A closes one opening 10A (the right-side opening in FIG. 3) of the case body 10, while the closing plate 20B closes the other opening 10A (the left-side opening in FIG. 3). The closing plates 20 close the respective openings 10A by being welded, over their entire peripheries, to the edge portions 10E (edges of the openings 10A) of the case body 10. A welding method therefor will be described later. FIG. 8 is an enlarged cross-sectional view showing a weld portion and its vicinity between the case body 10 and the closing plate 20 after this welding. As shown in FIG. 8, in the present embodiment, each closing plate 20 includes a closing portion 21 and an insertion portion 22.

In the present embodiment, the closing portion 21 has a first surface 21a, a second surface 21b, an outer peripheral edge 21c, and a chamfered portion 21d. In the closing portion 21, the first surface 21a is located on the opening 10A side of the case body 10, while the second surface 21b is located on a side opposite to the first surface 21a. The outer peripheral edge 21c surrounds the first surface 21a and the second surface 21b. The chamfered portion 21d is a part formed by chamfering between the second surface 21b and the outer peripheral edge 21c. In the present embodiment, the closing portion 21 is a substantially rectangular flat plate in plan view and has a size and shape that can close the opening 10A of the case body 10. Such closing portions 21 cover the respective openings 10A of the case body 10 and overlap the outside of the openings 10A. Specifically, the closing portion 21 of the closing plate 20 faces the opening 10A and its edge or edge portion 10E of the case body 10, thereby closing the opening 10A.

The insertion portion 22 of the closing plate 20 is located on the first surface 21a of the closing portion 21 and inserted into the opening 10A along an inner side 10a of the edge portion 10E of the case body 10.

Such a closing plate 20 and an edge portion 10E of the case body 10 are joined over the entire periphery of the opening 10A in the circumferential direction, whereby the case C is hermetically sealed (made airtight). Specifically, the case C includes a welded portion W and a non-welded region UW at a boundary between the case body 10 and each closing plate 20. That is, the electricity storage device 100 includes the welded portion W and the non-welded region UW at the boundary between the case body 10 and each closing plate 20. Each non-welded region UW is located on the opening 10A side (an inner side of the case in the thickness direction of the edge portion 10E) at the boundary between the case body 10 and the closing plate 20. Each welded portion W is located outside the non-welded region UW at the boundary. A part of the welded portion W is exposed to the outside of the case C. That is, the welded portion W faces outward of the case C. The welded portion W includes a raised portion Wa. The raised portion Wa is a part of the welded portion W that is raised outward beyond the outer peripheral edge 21c of the closing portion 21 and an outer side 10b of the edge portion 10E of the case body 10.

The welded portion W has a welding depth L1 and a welding width L2. The welding depth L1 is the length (welding deepness) of the welded portion W in the thickness direction of the edge portion 10E (edge of the opening 10A) of the case body 10. From the viewpoint of securing welding strength between the case body 10 and the closing plate 20, the welding depth L1 is preferably greater than or equal to a thickness H of the edge portion 10E, and more preferably greater than the thickness H of the edge portion 10E. The welding width L2 is the length of the welded portion W in the width direction Y of the case body 10. From the viewpoint of securing the welding strength described above, the welding width L2 is preferably greater than or equal to the welding depth L1, and more preferably greater than the welding depth L1. From the viewpoint of securing the welding strength described above, a ratio (L2/L1) of the welding width L2 to the welding depth L1 is preferably 1.0 or more, more preferably 1.2 or more, and even more preferably 1.5 or more. From the viewpoint of the efficiency of the welding step described later and, consequently, the manufacturing efficiency of the electricity storage device 100, the ratio (L2/L1) is preferably 3.0 or less, more preferably 2.5 or less, and even more preferably 2.0 or less.

In the present embodiment, as shown in FIG. 1, a liquid injection hole 25 is provided in the closing plate 20A. The liquid injection hole 25 is a hole for injecting the liquid electrolyte into the inside of the case C after assembling the closing plates 20A and 20B with the case body 10. After the liquid electrolyte is injected, the liquid injection hole 25 is sealed by a sealing member 26. Such a liquid injection hole 25 may be provided in the closing plate 20B or the case body 10 in the case C, instead of the closing plate 20A. Alternatively, the liquid injection hole 25 may be provided on the surface of the case C where the above-described gas release valve 15 is provided or on a different surface of the case C from the surface where the gas release valve 15 is provided.

As shown in FIG. 1, the positive electrode terminal 30 is attached to the closing plate 20A. Specifically, the closing plate 20A has a terminal opening that penetrates its closing portion 21 in the thickness direction, and the positive electrode terminal 30 is attached to the opening with a gasket made of an insulating material being interposed between the terminal and the closing plate 20A. An example of a means for attaching the positive electrode terminal 30 to the closing plate 20A is caulking. The positive electrode terminal 30 is exposed to the outside of the case C and also exposed to the inside of the case C. As shown in FIG. 3, inside the case C, the positive electrode terminal 30 is connected to a positive electrode current collector portion 31. Such a positive electrode terminal 30 is preferably made of metal, and more preferably aluminum or an aluminum alloy.

As shown in FIG. 2, the negative electrode terminal 40 is attached to the closing plate 20B. Specifically, the closing plate 20B has a terminal opening that penetrates its closing portion 21 in the thickness direction, and the negative electrode terminal 40 is attached to the opening with a gasket made of an insulating material being interposed between the terminal and the closing plate 20B. An example of a means for attaching the negative electrode terminal 40 to the closing plate 20B is caulking. The negative electrode terminal 40 is exposed to the outside of the case C and also exposed to the inside of the case C. As shown in FIG. 3, inside the case C, the negative electrode terminal 40 is connected to a negative electrode current collector portion 41. Such a negative electrode terminal 40 is preferably made of metal, and more preferably copper or a copper alloy.

As shown in FIG. 3, the electrode assembly 50 is accommodated in the case C or the case body 10. The electrode assembly 50 includes a positive electrode 51 and a negative electrode 52. In the present embodiment, the electrode assembly 50 is a so-called wound electrode assembly. The electrode assembly 50 is formed by winding a laminated body around a winding axis in the longitudinal direction, the laminated body including the band-shaped positive electrode 51 and the band-shaped negative electrode 52 which are laminated with a band-shaped separator (not shown) interposed therebetween. Instead of this configuration, the electrode assembly 50 may be a laminated electrode assembly in which rectangular positive electrodes and rectangular negative electrodes are stacked on each other in an insulated state therebetween.

In the present embodiment, the external shape of the electrode assembly 50 is flat. The electrode assembly 50 has a pair of curved portions and a pair of flat faces connecting the pair of curved portions. Such an electrode assembly 50 (wound electrode assembly) is accommodated in the case C with its winding axis oriented along the width direction Y. The pair of curved portions of the electrode assembly 50 respectively faces the pair of narrow side surfaces 11 and 12 of the case body 10. Instead of such an accommodated arrangement, the electrode assembly 50 may be accommodated in the case C with its winding axis oriented along the vertical direction Z.

The positive electrode 51 of the electrode assembly 50 has, for example, a laminated structure composed of a positive electrode current collector and a positive electrode active material layer. The positive electrode current collector is, for example, band-shaped and made of conductive metal. Examples of the conductive metal include aluminum, aluminum alloys, nickel, and stainless steel. The positive electrode current collector is preferably a conductive metal foil, and more preferably an aluminum foil. The positive electrode active material layer is provided, for example, in a band shape along the longitudinal direction on at least one surface of the band-shaped positive electrode current collector. The positive electrode active material layer contains a positive electrode active material capable of reversibly storing and releasing charge carriers, and a binder. The positive electrode active material is preferably a lithium transition-metal composite oxide. Specific examples of such oxides include a lithium cobalt composite oxide, a lithium manganese composite oxide, a lithium nickel composite oxide, a lithium nickel manganese composite oxide, a lithium nickel cobalt composite oxide, and a lithium nickel cobalt manganese composite oxide. An example of the binder is polyvinylidene fluoride (PVdF).

The negative electrode 52 of the electrode assembly 50 has, for example, a laminated structure composed of a negative electrode current collector and a negative electrode active material layer. The negative electrode current collector is, for example, band-shaped and made of conductive metal. Examples of conductive metals for the negative electrode include copper, copper alloys, nickel, and stainless steel. The negative electrode current collector is preferably a conductive metal foil, and more preferably a copper foil. The negative electrode active material layer is provided, for example, in a band shape along the longitudinal direction on at least one surface of the band-shaped negative electrode current collector. The negative electrode active material layer contains a negative electrode active material capable of reversibly storing and releasing charge carriers, and a binder. Examples of the negative electrode active material include carbon materials such as graphite and carbon. Examples of the binder for the negative electrode active material include styrene-butadiene rubber (SBR) and carboxymethyl cellulose (CMC).

The separator is a member that insulates the positive electrode active material layer and the negative electrode active material layer from each other, while retaining an ion-conductive liquid electrolyte between both layers. As the separator, a porous resin sheet made of a polyolefin resin is suitable. Examples of the polyolefin resin include polyethylene (PE) and polypropylene (PP). A heat-resistance layer (HRL) containing an inorganic filler may be provided on the surface of the separator. Examples of the constituent material for the inorganic filler include alumina, boehmite, aluminum hydroxide, and titania.

As shown in FIG. 3, the electrode assembly 50 includes positive electrode tabs 53 and negative electrode tabs 54, which extend in opposite directions from each other. The positive electrode tabs 53 extend toward the closing plate 20A at one end (the right side in FIG. 3) of the electrode assembly 50 in the width direction Y. The positive electrode tabs 53 form parts of the positive electrode 51. Specifically, each positive electrode tab 53 is a portion of the above-described (band-shaped) positive electrode current collector of the positive electrode 51 that is exposed without having a positive electrode active material layer laminated on its surface. The plurality of positive electrode tabs 53 are provided at predetermined intervals along the longitudinal direction of the positive electrode current collector. In the electrode assembly 50 as the wound electrode assembly, such multiple positive electrode tabs 53 are stacked and connected to the positive electrode current collector portion 31. The electrode assembly 50 is electrically connected to the above-described positive electrode terminal 30 via the positive electrode current collector portion 31. The negative electrode tabs 54 extend toward the closing plate 20B at the other end (the left side in FIG. 3) of the electrode assembly 50 in the width direction Y. The negative electrode tabs 54 form parts of the negative electrode 52. Specifically, each negative electrode tab 54 is a portion of the above-described (band-shaped) negative electrode current collector of the negative electrode 52 that is exposed without having a negative electrode active material layer laminated on its surface. The plurality of negative electrode tabs 54 are provided at predetermined intervals along the longitudinal direction of the negative electrode current collector. In the electrode assembly 50 as the wound electrode assembly, such multiple negative electrode tabs 54 are stacked and connected to the negative electrode current collector portion 41. The electrode assembly 50 is electrically connected to the above-described negative electrode terminal 40 via the negative electrode current collector portion 41.

The liquid electrolyte is accommodated inside the case C together with the electrode assembly 50. The electrode assembly 50 is impregnated with the liquid electrolyte. The liquid electrolyte is typically a non-aqueous liquid electrolyte (non-aqueous electrolyte) that contains a non-aqueous solvent and a supporting salt. Examples of non-aqueous solvents include carbonates such as ethylene carbonate (EC), dimethyl carbonate (DMC), and ethyl methyl carbonate (EMC). The supporting salt is, for example, a fluorine-containing lithium salt. Examples of fluorine-containing lithium salts include lithium hexafluorophosphate (LiPF₆) and lithium bis(fluorosulfonyl)imide (F₂LiNO₄S₂). Excess liquid electrolyte not impregnated in the electrode assembly 50 may be retained inside the case C. Instead of such a liquid electrolyte, a solid-state electrolyte (solid electrolyte) integrated with the electrode assembly 50 may be used.

FIG. 4 is a flowchart illustrating an example of a method for manufacturing the electricity storage device 100. The method for manufacturing the electricity storage device 100 includes a case body preparing step S1, a closing plate preparing step S2, an assembling step S3, and a welding step S4.

In the case body preparing step S1, the case body 10 having the openings 10A at both ends (the case body 10 having at least one side surface thereof open) is prepared. A method for preparing the case body 10 in this step is not particularly limited. The case body 10 may be prepared, for example, by bending a rectangular flat plate into shape.

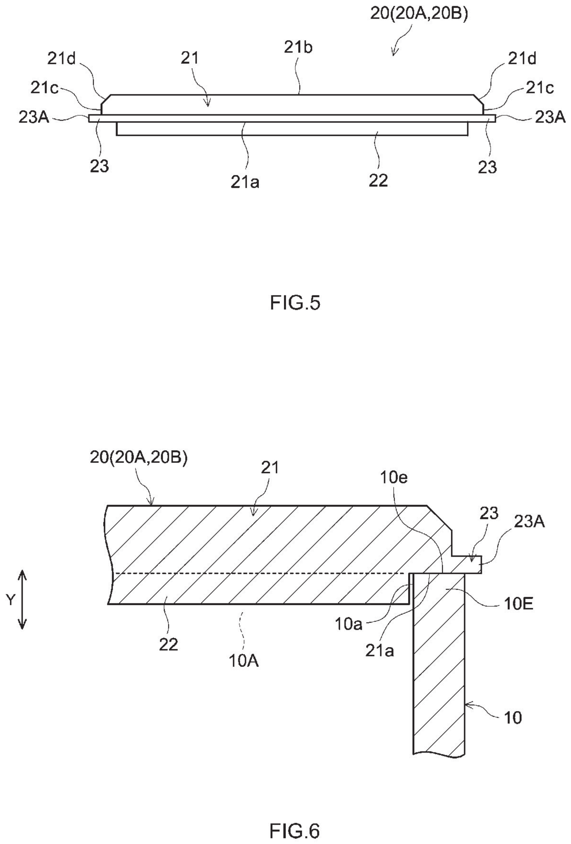

In the closing plate preparing step S2, the closing plates 20 (closing plates 20A and 20B) for closing the openings 10A of the case body 10 are prepared. In this step, the closing plate 20A is prepared with the above-described positive electrode terminal 30 attached thereto, while the closing plate 20B is prepared with the above-described negative electrode terminal 40 attached thereto. As shown in FIG. 5, each closing plate 20 prepared in this step includes the closing portion 21, the insertion portion 22, and an extension portion 23 (in FIG. 5, the illustration of the positive electrode terminal 30 and the negative electrode terminal 40 as the electrode terminals is omitted).

In the present embodiment, the closing portion 21 has the first surface 21a, the second surface 21b, the outer peripheral edge 21c, and the chamfered portion 21d. The first surface 21a is a surface facing the opening 10A of the case body 10 in the electricity storage device 100, while the second surface 21b is located on the side opposite to the first surface 21a in the closing portion 21. The outer peripheral edge 21c surrounds the first surface 21a and the second surface 21b. The chamfered portion 21d is a part formed by chamfering between the second surface 21b and the outer peripheral edge 21c. In the present embodiment, the closing portion 21 is a substantially rectangular flat plate in plan view and has a size and shape capable of closing the opening 10A of the case body 10. The insertion portion 22 is located on the first surface 21a of the closing portion 21 and has a size and shape capable of being inserted into the opening 10A of the case body 10. The extension portion 23 extends from the outer peripheral edge 21c of the closing portion 21 continuously in the circumferential direction of the closing portion 21. In the present embodiment, the extension portion 23 is thinner than the closing portion 21 and is flush with the closing portion 21 on the side of the first surface 21a (the side of the closing plate 20 facing the case body 10). In the present embodiment, such an extension portion 23 includes a protruding portion 23A as its tip portion (tip part in an extending direction from the closing portion 21). The protruding portion 23A will be described later.

A method for preparing the closing plate 20 is not particularly limited. The closing plate 20 is prepared, for example, by performing machining, such as drilling, on a single rectangular flat plate and then attaching the electrode terminal (positive electrode terminal 30, negative electrode terminal 40) and the like. The closing plate preparing step S2 may be performed before the case body preparing step S1 or after this step S1. The closing plate preparing step S2 may also be performed at the same time as the case body preparing step S1.

Next, in the assembling step S3, insertion of the electrode assembly 50 into the case body 10 and electrical connection of the electrode terminals (positive electrode terminal 30 and negative electrode terminal 40) to the electrode assembly 50 are performed. The assembling step S3 can be performed, for example, in the following way.

First, the positive electrode current collector portion 31 is connected to the plurality of positive electrode tabs 53, which are stacked, in the electrode assembly 50, while the negative electrode current collector portion 41 is connected to the plurality of negative electrode tabs 54, which are staked, in the electrode assembly 50. An example of the connection method is laser welding (the same applies to a connection method described later in the assembling step S3). Next, the negative electrode current collector portion 41 connected to the negative electrode tabs 54 is connected to the negative electrode terminal 40 attached to the closing plate 20B. A portion of the negative electrode terminal 40 exposed to the inner side of the case in the closing plate 20B is connected to the negative electrode current collector portion 41 (see FIG. 3). Then, the electrode assembly 50, accompanied by the closing plate 20B with the negative electrode terminal 40 attached thereto, is inserted into the inside of the case body 10 through one opening 10A of the case body 10 (the left-side opening 10A in FIG. 3), with its positive electrode tab 53 side facing forward. Next, the positive electrode current collector portion 31 connected to the positive electrode tabs 53 of the electrode assembly 50 is connected to the positive electrode terminal 30 attached to the closing plate 20A. A portion of the positive electrode terminal 30 exposed to the inner side of the case in the closing plate 20A is connected to the positive electrode current collector portion 31 (see FIG. 3). The assembling step S3 can be carried out, for example, in this way. The assembling step S3 may also be performed by other procedures.

Next, in the welding step S4, each closing plate 20 is mounted on the case body 10 so as to close the opening 10A, and in that state, the case body 10 and the closing plates 20 are laser-welded. FIG. 6 is a partially enlarged cross-sectional view showing a state where the closing plate 20 is mounted on the case body 10. As shown in FIG. 6, with the closing portion 21 of the closing plate 20 closing the opening 10A, the insertion portion 22 is inserted into the opening 10A along the inner side 10a of the edge portion 10E of the case body 10. In addition, in this state where the closing portion 21 closes the opening 10A, the closing plate 20 includes the protruding portion 23A, protruding outward beyond the outer edge (edge portion 10E) of the corresponding opening 10A, continuously in the circumferential direction of the opening 10A. In the present embodiment, the protruding portion 23A is a part of the extension portion 23 of the closing plate 20 that protrudes outward beyond the outer side 10b of the edge portion 10E (FIG. 8) with the closing portion 21 of the closing plate 20 closing the opening 10A. That is, the protruding portion 23A is a part of the extension portion 23 located at the tip of the extension portion 23.

After the closing plate 20 is mounted on the case body 10, but before it is welded, a clamp jig may be used to press the edge portion 10E of the case body 10 and its vicinity against the insertion portion 22 of the closing plate 20. The clamp jig includes, for example, a pair of first clamps that press the edge portions 10E and their vicinities of the pair of narrow side surfaces 11 and 12 in a direction orthogonal to the narrow side surfaces 11 and 12, and a pair of second clamps that press the edge portions 10E and their vicinities of the pair of wide side surfaces 13 and 14 in a direction orthogonal to the wide side surfaces 13 and 14. With such a clamp jig, the pair of first clamps can press the edge portions 10E and their vicinities of the narrow side surfaces 11 and 12 against the respective insertion portions 22 of the closing plates 20, while the pair of second clamps can press the edge portions 10E and their vicinities of the wide side surfaces 13 and 14 against the respective insertion portions 22. Such pressing positions the edge portions 10E of the case body 10 with respect to the closing plates 20 and the insertion portions 22. That is, the insertion portion 22 functions as a positioning reference. The formed case body 10 in its natural state tends to bulge outward, especially at the central portions of the wide side surfaces 13 and 14 in the vertical direction Z. When the closing plate 20 is mounted on the opening 10A or the edge portion 10E of such a case body 10, a gap may be easily formed between the case body 10 and the closing plate 20. In contrast, after the closing plates 20 are mounted on the edge portions 10E of the case body 10, pressing the edge portions 10E and their vicinities of the case body 10 against the respective insertion portions 22 of the closing plates 20 by the clamp jigs can correct the above bulging. As a result, the gap between the case body 10 and the closing plate 20 is less likely to be formed. This suppresses entry of welding spatter, which is generated during laser welding in the welding step S4, into the case body 10 or the inside of the case C through the gaps between the case body 10 and the closing plates 20.

In the welding step S4, the boundary between the case body 10 and each closing plate 20 is welded by irradiating the protruding portion 23A of the closing plate 20 with laser light LS to melt the protruding portion 23A. In the present embodiment, as shown in FIG. 7, the protruding portion 23A is irradiated with the laser light LS from the side opposite to the case body 10 along the above-described width direction Y. In the present embodiment, the protruding portion 23A is irradiated with the laser light LS continuously in the circumferential direction, thereby continuously welding the case body 10 and the closing plates 20 in the circumferential direction. Further, in the welding step S4, the protruding portion 23A, as well as the vicinities thereof in the both of the case body 10 and the closing plates 20 (parts of the edge portions 10E and parts of the closing portions 21), is temporarily melted, thereby forming the above-described welded portion W as shown in FIG. 8. Specifically, at the boundary between the case body 10 and each closing plate 20, the welded portion W (having the raised portion Wa described above) is formed outside the non-welded region UW so as to be partially exposed to the outside of the case while leaving the non-welded region UW on the side of the opening 10A. The raised portion Wa is formed as a result of deformation of the melted protruding portion 23A to reduce its surface area. By carrying out the welding step S4 in this way, the edge portion 10E of the case body 10 and each closing plate 20 are joined together around the entire opening 10A in the circumferential direction, thereby forming the case C that is hermetically sealed.

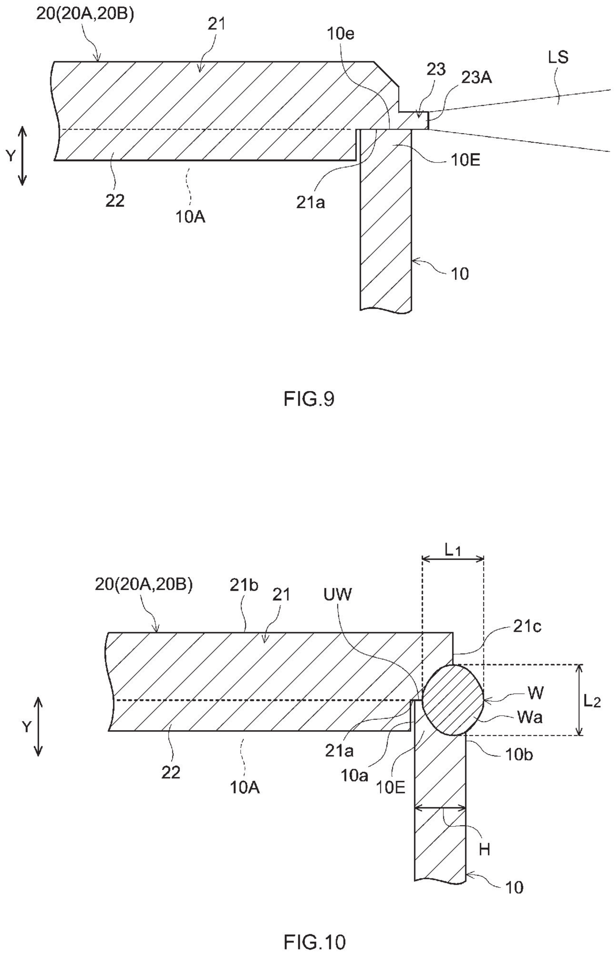

In the welding step S4, the irradiation direction of the laser light LS to the protruding portion 23A may be, for example, a direction intersecting (e.g., orthogonal to) the width direction Y, as shown in FIG. 9. Alternatively, the protruding portion 23A may be irradiated with the laser light LS along the width direction Y from the case body 10 side (the lower side in FIG. 7). Further, welding in the welding step S4 is performed, for example, under conditions in which the beam diameter of the laser light LS is set to 0.8 to 1.0 mm, its output is set to 6000 W, and the moving speed of the laser irradiation position is set to 300 mm/s. However, the welding conditions in the welding step S4 are not limited to these. Various laser welding devices known in the art may be used in the welding step S4.

After the welding step S4, steps such as a liquid injection step of injecting the liquid electrolyte into the case body 10, an aging step of leaving the electricity storage device 100 for a predetermined period after charging, and an inspection step of inspecting internal short-circuiting of the electricity storage device 100 are performed as appropriate. In the liquid injection step, specifically, the liquid electrolyte is injected into the inside of the case body 10 through the above-described liquid injection hole 25. In this way, the above-described electricity storage device 100 can be manufactured.

In the method for manufacturing the electricity storage device described above, each closing plate 20 prepared in the closing plate preparing step S2 includes the protruding portion 23A that protrudes outward beyond the outer edge of the opening 10A continuously in the circumferential direction of the opening 10A, with the closing portion 21 closing the opening 10A of the case body 10. In the welding step S4, the boundary between the case body 10 and the closing plates 20 is welded by irradiating the protruding portion 23A with the laser light LS and temporarily melting the protruding portion 23A and its vicinity. Such a welding method is suitable for forming the welded portion W, each having the secured welding depth L1 outside the non-welded region UW, while leaving the non-welded region UW on the opening 10A side at the boundary between the case body 10 and each closing plate 20 (non-penetration welding). By forming the welded portion W having the secured welding depth L1, the welding strength between the case body 10 and the closing plate 20 can be secured. The welding in the welding step S4 is non-penetration welding, which is suitable for suppressing entry of welding spatter into the inside of the case C, the welding spatter being generated from the melted part (molten pool) formed by irradiating the case body 10 and the closing plates 20 with the laser light.

In the above-described welding step S4, the protruding portion 23A is irradiated with the laser light LS continuously in the circumferential direction to thereby continuously weld the case body 10 and the closing plate 20 in the circumferential direction (circumferential continuous irradiation). Such a configuration is advantageous for shortening the time for the manufacturing of the electricity storage device 100. As shown in FIG. 7, irradiating the protruding portion 23A with the laser light LS along the width direction Y from the side opposite to the case body 10 as described above is preferable for achieving the above-described circumferential continuous irradiation, because welding with the laser welding device can be continued without changing the position or posture of a welding target (the case body 10 or the closing plate 20). In contrast, when the irradiation direction of the laser light LS to the protruding portion 23A is, for example, orthogonal to the width direction Y, the position or posture of the welding target (the case body 10 or the closing plate 20) needs to be changed such that each surface of the case body 10 (the narrow side surfaces 11, and 12 or the wide side surfaces 13 and 14) faces the irradiated laser light LS.

Each closing plate 20 prepared in the above-described closing plate preparing step S2 further includes the insertion portion 22 that is inserted into the opening 10A along the inner side 10a of the case body 10 with the closing plate 20 closing the opening 10A of the case body 10. Such a configuration enables the edge portions 10E of the case body 10 to be pressed against the insertion portions 22 of the closing plates 20 before the welding, thereby reducing the gap between the insertion portion 22 (closing plate 20) and the case body 10 and suppressing entry of welding spatter into the inside of the case C.

Each closing plate 20 prepared in the above-described closing plate preparing step S2 includes the extension portion 23 that extends from the outer peripheral edge 21c of the closing plate 20 continuously in the circumferential direction around the opening 10A of the case body 10. The extension portion 23 is thinner than the closing portion 21, is flush with the closing portion 21 on the case body 10 side in the closing plate 20, and includes the protruding portion 23A. Such a configuration is suitable for reducing the volume (heat capacity) of the portion to be melted during welding in the welding step S4, and therefore is suitable for reproducibly and stably forming the welded portion W with desired dimensions (the larger the volume of the portion to be melted, the greater the variations in the size of the formed welded portion tend to be).

As described above, each closing portion 21 of the closing plate 20 includes the chamfered portion 21d between the first surface 21a (the surface opposite to the opening 10A side of the case body 10) and the outer peripheral edge 21c of the closing portion 21. Such a configuration is useful for achieving appropriate laser light irradiation in the welding step S4 by avoiding the closing portion 21 partially blocking the laser light LS when the protruding portion 23A of the closing plate 20 is irradiated with the laser light LS from the side opposite to the case body 10.

Each welded portion W in the electricity storage device 100 includes, as described above, the raised portion Wa protruding outward beyond the outer peripheral edge 21c of the closing portion 21 and the outer side 10b of the edge portion 10E (outer surface of the case body 10) of the case body 10. Such a configuration is preferable for securing welding strength by securing the welding depth L1 in the welding between the case body 10 and each closing plate 20, while suppressing entry of welding spatter into the inside of the case by employing non-penetration welding in the welding between the case body 10 and the closing plates 20 in the manufacturing process of the electricity storage device 100.

The welding depth L1 of the welded portion W in the electricity storage device 100 is preferably greater than or equal to the thickness H of the edge portion 10E, and more preferably greater than the thickness H of the edge portion 10E, as described above. Such a configuration is preferable for securing the welding strength between the case body 10 and the closing plates 20.

As shown in FIG. 10, the closing plate 20 of the electricity storage device 100 does not need to have the chamfered portion 21d. In the closing plate preparing step S2 of the method for manufacturing such an electricity storage device 100, closing plates 20 without the chamfered portions 21d are prepared. In the welding step S4 of welding between such a closing plate 20 and the case body 10, the irradiation direction of the laser light LS with respect to the protruding portion 23A is preferably the direction intersecting (e.g., orthogonal to) the width direction Y described above, as described above with reference to FIG. 9.

The electricity storage device 100 is usable in various applications. The electricity storage device 100 can be suitably used, for example, as a power source (drive power supply) for a motor mounted on a vehicle such as a passenger car or a truck. The type of vehicle is not particularly limited, and examples thereof include a plug-in hybrid electric vehicle (PHEV), a hybrid electric vehicle (HEV), and a battery electric vehicle (BEV).

The technology disclosed herein has been described above from various points of view. Unless otherwise mentioned, the embodiments and the like described herein do not limit the present disclosure. The technology disclosed herein can be modified in various ways, and each component and each process mentioned herein can be omitted or combined as appropriate, as long as no special problems arise. The present specification also includes the disclosure set forth in each of the following items.

### Item 1:

A method for manufacturing an electricity storage device, including the steps of:
preparing a case body having, at at least one side thereof, an opening;
preparing a closing plate for closing the opening; and
laser-welding the case body and the closing plate with the closing plate mounted on the case body so as to close the opening, wherein
the closing plate prepared in the step of preparing the closing plate includes:
   a closing portion that covers the opening and overlaps an outside of the opening; and
   a protruding portion that protrudes outward beyond an outer edge of the opening continuously in a circumferential direction of the opening, with the closing portion closing the opening, and
in the step of laser-welding the case body and the closing plate,
a boundary between the case body and the closing plate is welded by irradiating the protruding portion with laser light to melt the protruding portion.

### Item 2:

The method for manufacturing an electricity storage device according to Item 1, wherein, in the step of laser-welding the case body and the closing plate, the protruding portion is irradiated with the laser light continuously in the circumferential direction to continuously weld the case body and the closing plate in the circumferential direction.

### Item 3:

The method for manufacturing an electricity storage device according to Item 1 or 2, wherein the closing plate further includes an insertion portion that is inserted into the opening along an inner side of the case body with the closing plate closing the opening.

### Item 4:

The method for manufacturing an electricity storage device according to any one of Items 1 to 3, wherein the closing plate includes an extension portion extending continuously in the circumferential direction from an outer peripheral edge of the closing portion, the extension portion being thinner than the closing portion, being flush with the closing portion on a side of the case body in the closing plate, and including the protruding portion.

### Item 5:

The method for manufacturing an electricity storage device according to Item 4, wherein the closing portion includes a chamfered portion between a surface thereof opposite to a side of the opening and the outer peripheral edge.

### Item 6:

The method for manufacturing an electricity storage device according to any one of Items 1 to 5, wherein
the case body prepared in the step of preparing the case body has a tubular shape with the openings at both ends thereof, and
in the step of preparing the closing plate, two closing plates are prepared,
the method further comprising the step of, before the step of laser-welding the case body and the closing plate for each opening, inserting an electrode assembly into an inside of the case body.

### Item 7:

An electricity storage device including:
a case body having, at at least one side thereof, an opening; and
a closing plate that closes the opening, wherein
the closing plate includes a closing portion that covers the opening and overlaps an outside of the opening,
the electricity storage device further includes, at a boundary between the case body and the closing plate:
   a non-welded region located on a side of the opening; and
   a welded portion located outside the non-welded region and facing outward.

### Item 8:

The electricity storage device according to Item 7, wherein the welded portion includes a raised portion that is raised outward beyond an outer peripheral edge of the closing portion and an outer surface of the case body.

### Item 9:

The electricity storage device according to Item 7 or 8, wherein the welded portion has a welding depth in a thickness direction of an edge of the opening, the welding depth being greater than or equal to a thickness of the edge.

### Item 10:

The electricity storage device according to any one of Items 7 to 9, wherein the closing plate further includes an insertion portion that is inserted into the opening along an inner side of the case body.

### Item 11:

The electricity storage device according to any one of Items 7 to 10, further comprising:
a chamfered portion between a surface of the closing portion opposite to a side of the opening and an outer peripheral edge of the closing portion.

## Claims

1. A method for manufacturing an electricity storage device (100), comprising the steps of:
preparing a case body (10) having, at at least one side thereof, an opening (10A);
preparing a closing plate (20) for closing the opening (10A); and
laser-welding the case body (10) and the closing plate (20) with the closing plate (20) mounted on the case body (10) so as to close the opening (10A), wherein
the closing plate (20) prepared in the step of preparing the closing plate (20) comprises:
a closing portion (21) that covers the opening (10A) and overlaps an outside of the opening (10A); and
a protruding portion (23A) that protrudes outward beyond an outer edge of the opening (10A) continuously in a circumferential direction of the opening (10A), with the closing portion (21) closing the opening (10A), and
in the step of laser-welding the case body (10) and the closing plate (20),
a boundary between the case body (10) and the closing plate (20) is welded by irradiating the protruding portion (23A) with laser light (LS) to melt the protruding portion (23A).

2. The method for manufacturing an electricity storage device (100) according to claim 1, wherein, in the step of laser-welding the case body (10) and the closing plate (20), the protruding portion (23A) is irradiated with the laser light (LS) continuously in the circumferential direction to continuously weld the case body (10) and the closing plate (20) in the circumferential direction.

3. The method for manufacturing an electricity storage device (100) according to claim 1 or 2, wherein the closing plate (20) further includes an insertion portion (22) that is inserted into the opening (10A) along an inner side (10a) of the case body (10) with the closing plate (20) closing the opening (10A).

4. The method for manufacturing an electricity storage device (100) according to any one of claims 1 to 3, wherein the closing plate (20) includes an extension portion (23) extending continuously in the circumferential direction from an outer peripheral edge (21c) of the closing portion (21), the extension portion (23) being thinner than the closing portion (21), being flush with the closing portion (21) on a side of the case body in the closing plate (20), and including the protruding portion (23A).

5. The method for manufacturing an electricity storage device (100) according to claim 4, wherein the closing portion (21) includes a chamfered portion (21d) between a surface thereof opposite to a side of the opening (10A) and the outer peripheral edge (21c).

6. The method for manufacturing an electricity storage device (100) according to any one of claims 1 to 4, wherein
the case body (10) prepared in the step of preparing the case body (10) has a tubular shape with the openings (10A) at both ends thereof, and
in the step of preparing the closing plate (20), two closing plates (20) are prepared,
the method further comprising the step of, before the step of laser-welding the case body (10) and the closing plate (20) for each opening (10A), inserting an electrode assembly (50) into an inside of the case body (10).

7. An electricity storage device (100) comprising:
a case body (10) having, at at least one side thereof, an opening (10A); and
a closing plate (20) that closes the opening (10A), wherein
the closing plate (20) includes a closing portion (21) that covers the opening (10A) and overlaps an outside of the opening (10A),
the electricity storage device (100) further includes, at a boundary between the case body (10) and the closing plate (20):
a non-welded region (UW) located on a side of the opening (10A); and
a welded portion (W) located outside the non-welded region (UW) and facing outward.

8. The electricity storage device (100) according to claim 7, wherein the welded portion (W) includes a raised portion (Wa) that is raised outward beyond an outer peripheral edge of the closing portion (21) and an outer surface of the case body (10).

9. The electricity storage device (100) according to claim 7 or 8, wherein the welded portion (W) has a welding depth in a thickness direction of an edge of the opening (10A), the welding depth being greater than or equal to a thickness of the edge.

10. The electricity storage device (100) according to any one of claims 7 to 9, wherein the closing plate (20) further includes an insertion portion (22) that is inserted into the opening (10A) along an inner side (10a) of the case body.

11. The electricity storage device (100) according to any one of claims 7 to 10, further comprising:
a chamfered portion (21d) between a surface of the closing portion (21) opposite to a side of the opening (10A) and an outer peripheral edge (21c) of the closing portion (21).
